Europäisches Patentamt

European Patent Office

Office européen des brevets

(19)

(11) Publication number: **0 043 830**
**B1**

(12) **EUROPEAN PATENT SPECIFICATION**

(45) Date of publication of patent specification: **13.06.84**

(51) Int. Cl.³: **H 01 S 3/10, H 01 S 3/13**

(21) Application number: **81900300.5**

(22) Date of filing: **20.01.81**

(86) International application number:
**PCT/AU81/00010**

(87) International publication number:
**WO 81/02224 06.08.81 Gazette 81/19**

(54) **BIREFRINGENCE COUPLED HIGH AVERAGE POWER LASER.**

(30) Priority: **21.01.80 AU 2077/80**

(43) Date of publication of application:
**20.01.82 Bulletin 82/3**

(45) Publication of the grant of the patent:
**13.06.84 Bulletin 84/24**

(84) Designated Contracting States:
**CH DE FR GB LI NL SE**

(56) References cited:
**AU - D - 2 209 367**
**AU - D - 5 204 173**
**CH - A - 430 904**
**CH - A - 499 216**
**FR - A - 1 543 717**
**FR - A - 2 079 364**
**FR - A - 2 444 351**
**GB - A - 1 073 179**
**GB - A - 1 096 167**
**GB - A - 1 464 584**
**US - A - 3 395 960**
**US - A - 3 407 364**
**US - A - 3 484 714**

(73) Proprietor: **THE COMMONWEALTH OF AUSTRALIA**
**c/o the Secretary Department of Industry and Commerce Anzac Park West Building Constitution Avenue Parkes**
**Canberra Australian Capital Territory 2600 (AU)**

(72) Inventor: **SEE, Brian Arthur**
**43 Valley View Drive**
**Highbury, S.A. 5089 (AU)**

(74) Representative: **Bond, Bentley George et al, HASELTINE LAKE & CO. Hazlitt House 28 Southampton Buildings Chancery Lane London, WC2A 1AT (GB)**

(56) References cited:

**Universita' Degli Studi di Napoli Facolta' di Ingegneria, Cattedra di Ottica ed Interazioni, Anno Accademico 1977/78 G.P. FARNESE: "Studio terico - sperimentale di alcune caratteristiche dei laser al Nd: YAG ad emissione continua" Thesis discussed on 28th December 1978**

Courier Press, Leamington Spa, England.

## Description

### Background of the invention

In a solid state laser such as Neodymium doped Yttrium Aluminium Garnet Laser (Nd:YAG), thermal gradients in the material operating at high average power input induce thermal birefringence and thermal lensing.

Thermal lensing can be overcome by suitable choice of mirror curvatures or by using compensating lenses in the laser cavity. Thermal birefringence is a more difficult problem.

In high average power lasers, the rod is usually water cooled. This introduces thermal gradients in the laser rod, the rod becoming hotter in the centre than at the edges. Since the rod is usually cylindrical, the thermal gradient is radial, and it induces optical birefringence so that light polarised in the radial direction propagates at a different velocity to light polarised in the tangential direction.

In a laser containing a polarising element such as a polarising prism, the plane polarised beam transmitted by the polarising element is, after passing through the laser rod, elliptically polarised. The degree of ellipticity and orientation of the major and minor axes vary from point to point over the rod surface. In a normal laser this causes a severe drop in laser output as a component of the light is subsequently rejected by the polarising element.

In a previous patent application filed in Australia under No. 53769/79 (PD 7124/78) the author discussed means of compensating for these effects by a 90 degree rotation of the plane of polarisation on each alternate pass through the laser rod. This has the effect of interchanging the radial and tangential components so that ellipticity induced in one pass through the rod is cancelled in the next pass (see also the corresponding FR—A— 2 444 351, forming the prior art part of claim 1).

Thermal compensation techniques are however complicated as is shown in patent application No. PD 7124/78, or the patent of G. D. Ferguson, United States Patent No. 4,068,190; or FR—A—2 079 364.

The degree of ellipticity and orientation of the ellipse after passing through the laser rod and back toward the polarising beam splitter varies from point to point over the surface of the rod, and energy "leaks" from the polarising element occur causing a drop in output.

It follows that if one closes the laser cavity by making both reflectors highly reflecting (i.e. approximately 100% reflecting) the energy leakage could constitute an output. Indeed such polarisation coupling has been used at low repetition rates by Ward in U.K. Patent 1,358,023 and by Crow in U.S. Patent 3,924,201. In these designs the polarisation state of the light is changed on the side of the cavity adjacent the laser rod by the use of a Porro prism aligned with its azimuth at approximately 45 degrees to the pass plane of the polarising beam splitter. This causes a uniform change of the polarisation state of the beam from plane polarised to elliptically polarised. On returning to the polarising beam splitter a component of the elliptically polarised light is reflected out of the cavity as the output.

An alternative to the use of the Porro prisms in this way is the use of a quarter wave plate in the side of the cavity adjacent the laser rod where the reflectors may be multi-layer dielectric mirrors. The azimuth angle of the wave plate is adjustable relative to the pass plane of the beam splitting polariser. The output from the laser varies as $(\sin(2\theta))^2$, where $\theta$ is the azimuth angle of the quarter wave plate, and the coupling is readily adjustable from 0 to 100% allowing the degree of coupling to be easily adjusted to an optimum value.

The author has shown experimentally that using a quarter wave plate in this way allows the laser to be run at low or high repetition rates with minor variations in the output energy. The azimuth angle of the quarter wave plate must be adjusted to maintain the output steady as the average power input is changed.

Such systems generally have serious defects at high average power input. Because the birefringence across the laser rod varies from point to point over ist surface and in magnitude with the average power, the intensity distribution of the laser output at high average power (or high repetition rate) shows strong spatial variations.

Computer studies of the variation in coupling, with thermal birefringence taken into account, show marked changes across the rod cros-section with average power and azimuth angle of the quarter wave plate. This variation in coupling gives rise to corresponding variations of the intensity distribution.

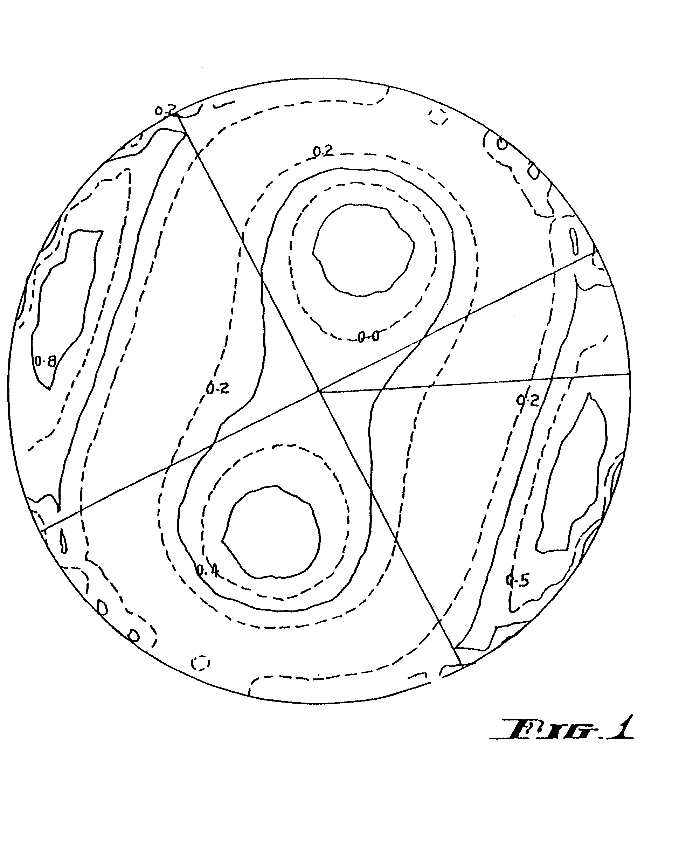

Although intensity variations of the type referred to may not in themselves be undesirable: at points where the combined effects of the quarter wave plate and the birefringence of the rod produce low coupling, very high energy densities may occur leading to damage of laser components. (See Fig. 1).

### Objects of the invention

The object of the present invention is to overcome these spatial variations in output coupling and produce more uniform coupling across the beam diameter.

### The invention

According to this invention uniformity of the coupling is improved by introducing a naturally birefringent element in the laser cavity which has rapid spatial variation of the relative phase shift between orthogonally polarised components of light. Such spatial variation of the phase shift should preferably be on a scale small compared to the fundamental mode spot size so that it does not modify the distribution of modes in the cavity and thereby achieves uniform coupling.

Thus what is required is in fact depolarisation of the light in the end of the cavity adjacent the laser rod. No perfect depolariser exists, but techniques for accomplishing depolarisation are discussed by Schmidt and Vedam in Optica Acta 1971, Vol. 18, No. 9, pp 713—718.

The techniques described here are based on the ideas of Schmidt and Vedam with the objectives for the laser discussed previously.

The invention thus comprises a laser rod arranged in a cavity between two total reflectors and including on the laser rod axis a polariser, characterised by a depolarising lens assembly also on said laser rod axis. The lens assembly may be a zoom lens to compensate for changes in focal power of the lens.

The invention can be carried out in many ways, but to enable the nature of the invention to be fully appreciated, various embodiments will now be referred to, but these are not to be taken as limiting the invention to the specific embodiments now to be described.

In the drawings:—

Fig. 1 is a computer generated plot of the coupling variations across a 6 mm diameter laser rod having a $\lambda/4$ thermal distortion from centre to edge. The quarter wave plate azimuth angle is 15°. Intensity distributions corresponding to this are found in practice.

Fig. 2 is a schematic perspective view of a typical arrangement of the invention using mirrors as the reflecting means,

Fig. 3 is a longitudinal section of the depolarising lens assembly,

Fig. 4 is a view corresponding to Fig. 2 but showing roof prisms as the reflectors,

Fig. 5 shows a computer generated contour plot of the coupling variations across a 6 mm diameter laser rod having a $\lambda$ thermal distortion from centre to edge of the laser rod. The depolarising assembly used in this case has a $4\lambda$ centre to edge variation and is oriented at an azimuth angle of 45°. The spatial frequency of the coupling variations introduced by the depolarising assembly is high and the additional variations caused by thermal distortion in the laser rod constitute a perturbation rather than being the dominant effect.

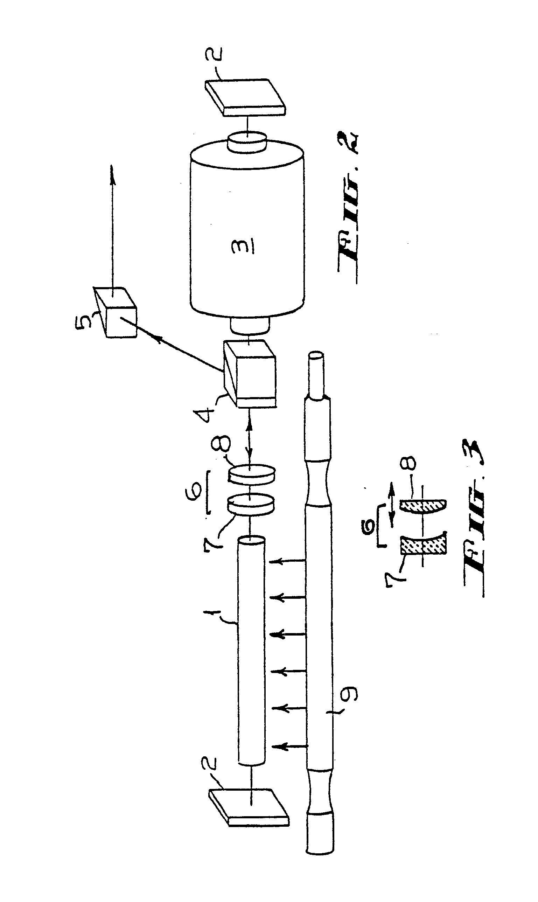

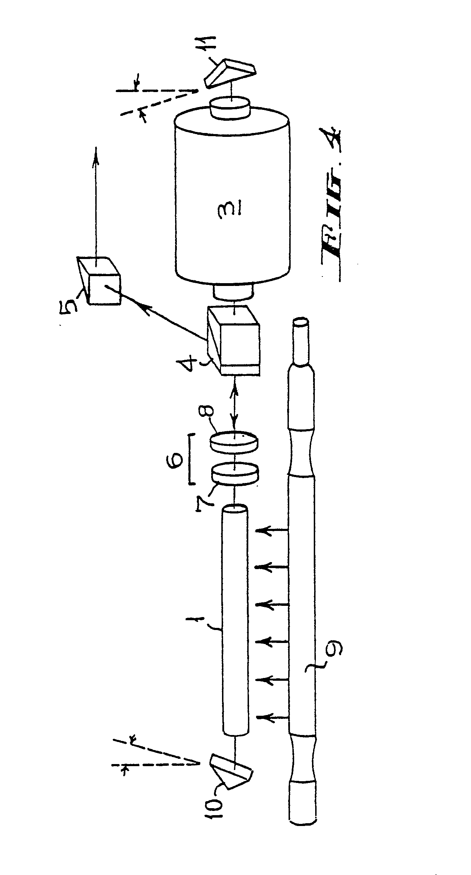

In the embodiment shown in Figs. 2 and 3 a laser rod 1 has a pair of total reflection mirrors 2—2 arranged one on either side of the laser rod to form a cavity therebetween in which the laser rod is axially aligned, but between the one mirror 2 and the rod 1 is interposed a Q switch 3 and a polarising prism 4, the latter forming an angular output for the laser beam to a frequency doubler, 5, but in place of the fixed quarter wave plate normally used in such an assembly a lens-like wave plate 6 is used. This is formed of a pair of spaced-apart lens elements 7 and 8, at least one element of which is ground from birefringent crystalline material (e.g. quartz) with the curvature of the surface (or surfaces) chosen to give rapid radial variation of the phase shift and is oriented at an azimuth angle of 45 degrees to the pass plane of the polariser 4. To compensate for the lensing action of the wave plate, the second lens element is of opposite sign, and may also be fabricated of birefringent crystalline material to further enhance the depolarising action.

Further, if the two lens elements 7 and 8 are designed so that their separation may be varied, the optical power of the combination may be altered to compensate for the lensing induced in the laser rod 1 at high average power.

Computer modelling of such a system indicated that the coupling across the laser beam approaches an average value of 50% if the phase shift on the central axis is suitably chosen.

If in such a system the average coupling is plotted against the relative phase shift at the centre of the lens-like wave plate 6 with the azimuth angle as a parameter, it is seen that maximum coupling is obtained with a central phase shift of 0.3 wavelength at an azimuth angle of 45 degrees.

If both lens elements are of birefringent crystalline material then the difference in phase shift between the two on the central axis must be approximately 0.3 wavelength for maximum coupling efficiency.

Another possible variation is to fabricate one of the lens elements as an optical rotator and the other as a lens-like wave plate. The optical rotator is cut from a birefringent material which exhibits optical rotatory power, with the lens axis parallel to the optic axis. The wave plate is cut with the lens axis at right angles to the optical axis.

Laser rod energisation is by a flash lamp 9.

The computer models of the embodiment just described indicate that the spatial frequency of the depolarisation which can be achieved may not be as high as is desired. This can result in significant areas of the laser rod over which the coupling is low and this can cause damage as indicated previously.

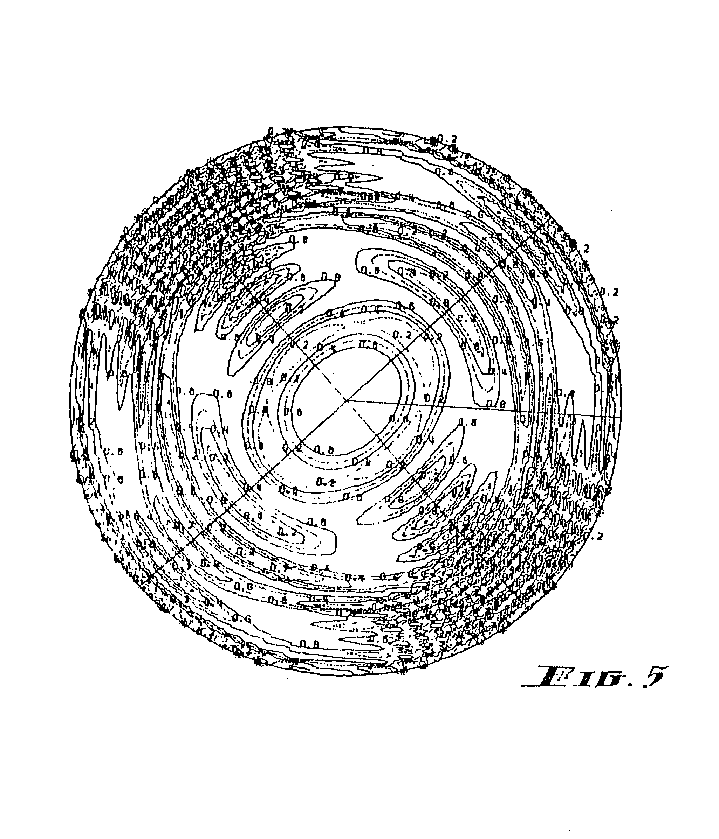

The second embodiment shown in Fig. 4, which is the generally preferred embodiment, uses the depolarising zoom lens assembly 6 in conjunction with a crossed Porro prism resonator comprising the prisms 10 and 11. In an evaluation of the crossed Porro resonator the author has shown that where the Porro prism azimuth angles are chosen correctly the resonator has the property of averaging, in a circumferential sense, the internal energy distribution.

Reasonable averaging is obtained where the angle between the Porro prism roof edges is in the range 55° to 80° with best averaging in the range 65° to 75°.

The materials of which the Porro prisms are fabricated are chosen to achieve the desired degree of coupling for the Porro prism adjacent the laser rod and the desired hold-off to prevent lasing for the Porro adjacent the Q switch. The choice of materials is further made to satisfy the condition that the angle between rood edges should be in the range 65° to 75°.

When used in conjunction with the crossed Porro resonator in this way, the depolarising zoom lens assembly should be fabricated such that the central phase difference is $N\lambda$ where $N=0, 1, 2 \dots$ .

## Claims

1. A high average power laser comprising a laser rod (1) arranged in a cavity between two reflectors (2) and including in the cavity on the axis of the said laser rod a polarising element (4) forming an output for the laser beam and at least one birefringent element (6) for the spatial depolarization of the light adjacent the said laser rod, characterised in that said birefringent element (6) is in the form of a lens assembly consisting of a pair of lens elements (7, 8) spaced apart, at least one said lens elements being formed from birefringent crystalline material.

2. A high average power laser according to claim 1 characterised in that the curvature of the birefringent lens surface is chosen to give rapid radial variation of the phase shift and is orientated at an azimuth angle of 45 degrees to the pass plane of the polarising element (4).

3. A high average power laser according to claim 2 characterised in that the said lens elements comprise one positive element (8) and one negative element (7).

4. A high average power laser according to any one of claims 1, 2 or 3 characterised in that at least one of said lens elements is movable in distance from the other to provide a variable separation to select the optical power of the combination to compensate for lensing induced in the said laser rod at high average power.

5. A high average power laser according to any one preceding claim wherein the said reflectors are mirrors with total reflecting power.

6. A high average power laser according to any preceding claim characterised in that said reflectors are Porro prisms arranged to form a crossed prism resonator.

7. A high average power laser according to preceding claim 2 characterised in that one of said lens elements is arranged as an optical rotator and the other as a wave plate, the said optical rotator being cut from a birefringent material which exhibits optical rotary power the lens axis being parallel to the optic axis.

## Patentansprüche

1. Laser mit hoher mittlerer Leistung mit einem Laserstab, welcher in in einem Hohlraum zwischen zwei Reflektoren (2) angeordnet ist und in dem Hohlraum auf der Achse des Laserstabes ein Polarisationselement (4) aufweist, welches einen Ausgang für den Laserstrahl und wenigstens ein doppelt brechendes Element (6) für die räumliche Depolarisation des Lichtes benachbart dem Laserstab bildet, dadurch gekennzeichnet, daß das doppelt brechende Element (6) die Form einer Linsenanordnung hat, die aus einem Paar von im Abstand voneinander angeordneten Linsenelementen (7, 8) besteht, wobei wenigstens eine der Linsenelemente aus einem doppelt brechenden kristallinen Material besteht.

2. Laser mit hoher mittlerer Leistung nach Anspruch 1, dadurch gekennzeichnet, daß die Krümmung der Oberfläche der doppelt brechenden Linse so ausgewählt ust, daß eine schnelle radiale Änderung der Phasenverschiebung eintritt und unter einem Azimuth-Winkel von 45° zur Durchlaßebene des polarisierenden Elementes (4) orientiert ist.

3. Laser mit hoher mittlerer Leistung nach Anspruch 2, dadurch gekennzeichnet, daß die genannten Linsenelemente ein positives Element (8) und ein negatives Element (7) aufweisen.

4. Laser mit hoher mittlerer Leistung nach einem der Ansprüche 1, 2 oder 3, dadurch gekennzeichnet, daß wenigstens eines der Linsenelemente im Abstand von dem anderen beweglich ist, um eine veränderliche Trennung zur Auswahl der optischen Brennstärke der Kombination vorzusehen, um eine Linsenwirkung zu kompensieren, die in dem Laserstab bei hoher mittlerer Leistung induziert wird.

5. Laser mit hoher mittlerer Leistung nach einem der vorhergehenden Ansprüche, dadurch gekennzeichnet, daß die Reflektoren Spiegel mit Totalreflektionsvermögen sind.

6. Laser mit hoher mittlerer Leistung nach einem der vorhergehenden Ansprüche, dadurch gekennzeichnet, daß die Reflektoren Porro-Prismen sind, die so angeordnet sind, daß sie einen Resonator mit gekreuztem Prisma bilden.

7. Laser mit hoher mittlerer Leistung nach Anspruch 2, dadurch gekennzeichnet, daß eines der Linsenelemente als ein optischer Rotor und das andere als eine Wellenplatte angeordnet sind, wobei der optische Rotor aus einem doppelt brechenden Material geschnitten ist, welches eine optische Drehkraft ausübt, während die Linsenachse parallel zur optischen Achse verläuft.

## Revendications

1. Laser de puissance moyenne élevée comprenant un barreau laser (1) disposé dans une cavité entre deux réflecteurs (2) et comportant dans la cavité, dans l'axe du barreau laser, un élément polarisant (4) constituant une sortie du faisceau laser et au moins un élément biréfringent (6) pour réaliser une dépolarisation spatiale de la lumière au voisinage du barreau laser, caractérisé en ce que cet élement biréfringent (6) a la forme d'un ensemble de lentilles formé de deux lentilles (7, 8) espacées l'une de l'autre, l'une au moins de ces lentilles étant fabriquée à partir d'un matériau cristallin biréfringent.

2. Laser de puissance moyenne élevée suivant la revendication 1, caractérisé en ce que la courbure de la surface de la lentille biréfringente est choisie pour produire une variation radiale du déphasage et est orientée de manière à former un angle azimutal de 45 degrés avec le plan de passage de l'élément polarisant (4).

3. Laser de puissance moyenne élevée suivant la revendication 2, caractérisé en ce que les éléments formant lentilles comprennent un élément positif (8) et un élément négatif (7).

4. Laser de puissance moyenne élevée suivant l'une quelconque des revendications 1, 2 ou 3, caractérisé en ce que l'un au moins des éléments formant lentilles est mobile par rapport à l'autre afin de fournir une séparation variable permettant de sélectionner la puissance optique de la combinaison afin de compenser l'effet de lentille provoqué dans le barreau laser à puissance moyenne élevée.

5. Laser de puissance moyenne élevée suivant l'une quelconque des revendications précédentes, caractérisé en ce que les réflecteurs sont des miroirs à pouvoir de réflexion totale.

6. Laser de puissance moyenne élevée suivant l'une quelconque des revendications précédentes, caractérisé en ce que les réflecteurs sont des prismes de Porro disposés de manière à former un résonateur à prismes croisés.

7. Laser de puissance moyenne élevée suivant la revendication 2, caractérisé en ce que l'un des éléments formant lentilles est monté sous forme d'élément de polarisation rotatoire optique et l'autre sous forme de lame d'onde, l'élément de polarisation rotatoire optique étant taillé dans un matériau biréfringent qui présente un pouvoir rotatoire optique, l'axe de la lentille étant parallèle à l'axe optique.

FIG.1

FIG. 2

FIG. 3

FIG. 4

FIG. 5